(19) Europäisches Patentamt
European Patent Office
Office européen des brevets

(11) EP 4 147 321 B1

(12) # EUROPEAN PATENT SPECIFICATION

(45) Date of publication and mention of the grant of the patent:
**22.10.2025 Bulletin 2025/43**

(21) Application number: **21724361.7**

(22) Date of filing: **29.04.2021**

(51) International Patent Classification (IPC):
***H02J 3/48*** *(2006.01)* ***H02J 3/50*** *(2006.01)*

(52) Cooperative Patent Classification (CPC):
**H02J 3/48; H02J 3/50;** H02J 2203/10

(86) International application number:
**PCT/GB2021/051031**

(87) International publication number:
**WO 2021/224592 (11.11.2021 Gazette 2021/45)**

(54) **LOCAL CONTROL OF AN ELECTRICITY DISTRIBUTION NETWORK USING VOLTAGE-SOURCE CONVERTERS**

LOKALE STEUERUNG EINES STROMVERTEILUNGSNETZES MIT SPANNUNGSQUELLENUMRICHTERN

COMMANDE LOCALE D’UN RÉSEAU DE DISTRIBUTION D’ÉLECTRICITÉ À L’AIDE DE CONVERTISSEURS DE SOURCE DE TENSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.05.2020 GB 202006520**

(43) Date of publication of application:
**15.03.2023 Bulletin 2023/11**

(73) Proprietor: **University College Cardiff Consultants Ltd**
**Cardiff**
**South Glamorgan CF24 0DE (GB)**

(72) Inventors:
- **WU, Jianzhong**
  **Cardiff CF24 3AA (GB)**
- **LONG, Chao**
  **Cardiff CF10 4JB (GB)**

(74) Representative: **Worsley, Theo Morgan**
**Withers & Rogers LLP**
**2 London Bridge**
**London SE1 9RA (GB)**

(56) References cited:
**WO-A1-2016/012411**
**WO-A1-2017/062109**
**CN-A- 107 732 926**
**US-A1- 2013 250 635**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 147 321 B1

## Description

### Field of Invention

The invention relates to the field of electrical power distribution networks and control of Voltage-Source Converters (VSC).

### Background

In the UK, the "electrical grid" is the name given to the system for transmitting and distributing electrical power from electrical energy sources (e.g. power stations) to electrical consumers (e.g. large industry, businesses or homes). In approximate terms, the electrical grid can be thought of as containing power stations that supply electrical power to a transmission network that in turn supplies power to regional distribution networks, which in turn supply electrical power to consumer premises (e.g. homes and businesses). The transmission network operates at a Very High Voltage (typically 275kV or 400kV), in order to improve the efficiency of the delivery of electrical power. Substations connect the regional distribution networks to the transmission network and serve to lower the voltage down to High Voltage (typically to 132kV). Further substations connect the 132kV distribution networks to distribution networks with lower voltage levels, and operate to reduce the High Voltage to Medium Voltage (typically 33kV and 11kV) and Low Voltage (typically 400V three-phase line-to-line voltage and 230V single phase line-to-neutral voltage) for delivery to consumer premises.

With the advent of a high penetration of distributed generators (DGs), such as solar and wind farms, a great amount of power can be supplied directly to distribution networks. Under certain circumstances with high DG output or high demand (e.g. with a high penetration of heat pumps and electric vehicles), power flow could exceed the thermal limits of cables and overhead lines - this could ultimately cause cable insulation failure or damage transformers and power lines, and voltage also could violate the limits. Thus, the possibility of faults increases with high DG penetrations and high levels of power demand.

CN107732926A discloses a voltage source converter-comprising alternating current and direct current series-parallel power grid reactive optimization method, and belongs to the field of optimization and dispatching of an electric power system. At current, reactive regulation after flexible direct current power transmission is introduced is not taken into consideration in an AVC strategy, and an effective active and reactive closed loop control method for the voltage source converter is absent. The reactive optimization method comprises the steps of establishing a flexible direct current power transmission system reaction model; establishing a reactive optimization constraint condition of the flexible direct current power transmission system, and a target function, obtaining a reactive optimization model, and solving the reactive optimization model according to the set constraint condition; and specific to the established reactive optimization model, solving the target function by adopting a branch and bound method in combination of a prime-dual interior point method.

WO2016012411A1 discloses a voltage source converter comprising a controller configured to; receive an active power order comprising the desired amount of active power to be transferred by the convertor and receive an reactive power order comprising the desired amount of reactive power to be transferred by the convertor; receive a measurement of the instantaneous voltage of each phase of the multi- phase AC electrical network; determine an active and reactive phase current reference value for each single- phase limb which is independent of the or each other respective phase current reference and which defines the current each single-phase limb is required to draw from or pass to a corresponding phase of the AC electrical network to effect the active power and reactive power exchanges with the AC electrical network defined by the active and reactive power orders; the active phase current reference values determined based on the received active power order, the instantaneous voltage measurements and a determination of a resultant instantaneous reactive power using said active phase current reference values; and/or the reactive phase current reference values determined based on the received reactive power order, the instantaneous voltage measurements and a determination of a resultant instantaneous active power using said reactive phase current reference values.

US2013250635A1 discloses a photovoltaic power plant includes solar cells and inverters that convert direct current generated by the solar cells to alternating current. The reactive powers generated by the inverters are based on a reactive power generated by a virtual inverter. The virtual inverter has an equivalent impedance representing the impedances of the inverters in the photovoltaic power plant. The reactive power setpoints of the inverters may be received from a local interpreter. The local interpreter may generate the reactive power setpoints from a global reactive power setpoint generated by a grid controller.

WO2017062109A1 discloses a solar power conversion system includes a photovoltaic array having photovoltaic modules for generating direct current (DC) power. A power converter in the system converts the DC power to alternating current (AC) power. The AC power is transmitted to the power grid via a transformer coupled between the power converter and the power grid. The transformer is connected to the power grid at the point of common coupling (PCC) and to the power converter at output terminals. A voltage estimation module is configured to estimate a voltage at PCC based on a measured voltage magnitude, a measured real power and a measured reactive power at the output terminals, and a reactance of the transformer. A controller is provided in the system for generating switching command signals for the power converter based on the voltage at PCC.

## Summary

Aspects of the invention are described in accordance with the appended set of claims.

## Brief Description of Figures

By way of example only, certain embodiments of the invention will now be described with reference to the accompanying drawings, in which:

Figure 1 is a block diagram schematically illustrating a Medium-Voltage distribution network;

Figure 2 is a block diagram schematically illustrating a voltage-source converter;

Figure 3 is a pi-equivalent model of a Medium-Voltage distribution network (with the line capacitive reactance neglected);

Figure 4 is a plot of a straight-line equation derived from the model of Figure 3; and

Figure 5 is a plot of a straight line fitted to measured active and reactive power values.

## Detailed Description

Figure 1 shows a distribution network 10 operating as part of an electricity supply network for delivering generated power to consumer premises, i.e. industrial, commercial or residential. The distribution network 10 comprises substations 12-28, distributed generators (DGs) 30 and 32, a voltage-source converter (VSC) 34, and distribution lines 36-62 interconnecting the substations 12-28, DGs 30 and 32 and VSC 34. In this example, the operating voltage in the distribution network 10 is 33kV. Power is supplied to the distribution network 10 from 132kV lines 64-68 which are more thickly drawn in the figure, form part of a High Voltage regional distribution network (no other parts of which are shown), and are connected into substations 12-16. Each of the substations 12-16 is designed to transform the 132kV voltage to 33kV. Substations 18-28 deliver power from the network 10 to lower-voltage substations (not shown), which in turn supply customer premises (again, not shown). In this example, substations 18-28 transform the 33kV voltage of the distribution network 10 down to 11kV.

If the distribution network 10 followed the classical model, the substations 12-16 would be responsible for the flow of power into the network 10, and the substations 18-28 would be responsible for the flow of power out of the network 10. However, distribution network 10 differs from the classical model in that the network also includes DGs 30 and 32, and VSC 34. DGs 30 and 32 are a solar array and a wind farm, respectively, and they feed electrical power into the distribution network 10. The VSC 34 can function as both a source and a sink of electrical power. In the exemplary scenario shown in Figure 1, the VSC 34 is connected to another VSC 37 over a DC link 70. VSC 37 is connected to another distribution network (not shown) that is analogous to distribution network 10. The two VSCs 34 and 37 cooperate to transfer power between the two distribution networks as necessary to meet customer demands and satisfy network operating constraints. The nature and operation of VSC 34 will now be described in more detail, with reference to Figure 2.

A voltage-source converter - or VSC - is a power-electronics device that has AC and DC terminals and can control the flow of power between those terminals and the voltage at the DC terminal. Commonly, a VSC comprises a set of insulated-gate bipolar transistors (IGBTs) that are switched on and off according to an algorithm. The VSC 34 is an example of this type, and its structure is schematically illustrated in Figure 2.

As shown in Figure 2, VSC 34 has six arms in a bridge configuration, each arm containing a respective IGBT 72-82. The VSC 34 also includes a controller 84 that produces pulse-width-modulated (PWM) signals 86 for controlling switching of the IGBTs 72-82. Further, the VSC 34 has AC and DC terminals 88 and 90, respectively. The AC terminal 88 is connected into the distribution network by an isolating transformer (not shown). The voltage and current of the AC terminal 88 are measured by voltage and current sensors 96 and 98, respectively. Low pass filters 92 are provided for smoothing the AC voltage produced by the IGBTs 72-82. Capacitors 94 limit DC ripple in the DC voltage at terminal 90.

The voltage characteristics at the AC and DC terminals 88 and 90 and the direction of and magnitude of real and reactive power flow (if any) between those terminals is dictated by the PWM signals 86. The PWM signals 86 are produced by the controller 84. The controller 84 develops the PWM signals 86 using an algorithm which takes as inputs the current and voltage measurements from the sensors 96 and 98 and, *inter alia,* commands from the power company operating the distribution network 10. These commands can be provided locally via a user interface provided on the VSC 34 or remotely via a data connection. In this particular example, the VSC 34 is controlled by controller 33 via interface 35.

Typically, the power company will direct the VSC 34 to attempt to maintain a target AC voltage at terminal 88, and the VSC 34 will then absorb reactive power from, or inject reactive power into, the distribution network 10 as necessary in order to maintain the target AC voltage at terminal 88.

The distribution network 10 can be modelled as a pi-equivalent circuit of the form shown in Figure 3. As the distribution network 10 is a meshed network, the pi-equivalent circuit in Figure 3 simplifies the network 10 to a two-terminal line structure from the power supplies (i.e. substations 12-16) as one terminal and electricity load with VSC as the other terminal. The various parameters in Figure 3 will now be explained:

a) $2P_G$ is the cumulative value of the active power supplied to the distribution network 10 by the various distributed generators present, i.e., DGs 30 and 32.

b) $2Q_G$ is the cumulative value of the reactive power supplied to the distribution network 10 by the various distributed generators present, i.e., by DGs 30 and 32.

c) $2P_L$ is the cumulative value of the active power drawn from the distribution network 10 by the various loads present, i.e. by substations 18-28.

d) $2Q_L$ is the cumulative value of the reactive power drawn from the distribution network 10 by the various loads present, i.e. by substations 18-28.

e) R is the line resistance of the transmission lines in network 10.

f) X is the line reactance of the transmission lines in network 10.

g) $P_{VSC1}$ is the active power supplied to the distribution network 10 by the VSC 34. If the value is negative, then the VSC 34 is drawing active power from the distribution network 10.

h) $Q_{VSC1}$ is the reactive power supplied to the distribution network by the VSC 34. If the value is negative, then the VSC 34 is drawing reactive power from the distribution network 10.

i) $V_o$ is the voltage at the secondary side of the transformers (not shown) of each of the substations 12-16.

j) $V_1$ is the voltage at the AC terminal 88 at which the VSC 34 is connected into the distribution network 10.

The approximate voltage drop throughout the circuit of Figure 3 is:

$$\Delta V = V_o - V_1 = \frac{R(P_L - P_G - P_{VSC1}) + X(Q_L - Q_G - Q_{VSC1})}{V_o} \qquad \text{— equation 1}$$

DGs are normally operated with unity power factor to maximise their active power output. Thus, $Q_G$ can be assumed to be zero. Additionally, in order to minimise the losses in the distribution network 10, the VSC 34 is operated to try to match $V_1$ to $V_o$. Under those circumstances, $\Delta V$ will be zero. In this context, equation 1 becomes:

$$R(P_L - P_G - P_{VSC1}) + X(Q_L - Q_{VSC1}) = 0 \qquad \text{— equation 2}$$

Equation 2 can be rearranged as:

$$RP_{VSC1} + XQ_{VSC1} = R(P_L - P_G) + XQ_L \qquad \text{— equation 3}$$

**Equation** 3 can be rearranged into the format of an equation describing a straight line linking variables $P_{VSC1}$ and $Q_{VSC1}$:

$$P_{VSC1} = -\frac{X}{R} Q_{VSC1} + \frac{R(P_L - P_G) + XQ_L}{R} \qquad \text{— equation 4}$$

This straight line is plotted in Figure 4. Equation 4 can be rewritten as:

$$P_{VSC1} = mQ_{VSC1} + c \qquad \text{— equation 5}$$

where $m = -\frac{X}{R}$ is the gradient of the straight line and $c = \frac{R(P_L - P_G) + XQ_L}{R}$ is the intercept with the $Q_{VSC1}$ axis. Thus, it should be possible to fit a straight line to the variables $P_{VSC1}$ and $Q_{VSC1}$ of VSC 34.

As mentioned earlier, a power company will normally aim to minimise power loss in a distribution network, and, in the case of the pi equivalent circuit of Figure 3, power losses are represented by current flowing through X and R, and if $V_1$ matches $V_o$, then there is no current flow through, and therefore no power losses in, $X$ and R. With reference again to equation 1, it should be apparent that $\Delta V$ will be zero if $P_L$ - $P_G$ - $P_{VSC1}$ and that $Q_L$ - $Q_G$ - $Q_{VSC1}$ both equal zero. $P_L$ - $P_G$ - $P_{VSC1}$ = 0 can be rearranged as $P_{VSC1}$ = $P_L$ - $P_G$ and $Q_L$ - $Q_G$ - $Q_{VSC1}$ = 0 can be rearranged as $Q_{VSC1}$ = $Q_L$ - $Q_G$. respectively. Moreover, given that DGs are normally operated with $Q_G$ = 0, the expression $Q_{VSC1}$ = $Q_L$ - $Q_G$ can be approximated as $Q_{VSC1}$ = $Q_L$ . Therefore, in order to achieve the minimum losses state where $\Delta V$ = 0, the active power of the VSC 34 needs to be set to $P_L$ - $P_G$ and the reactive power of the VSC 34 needs to be set to $Q_L$. As will now be explained, $Q_L$, m and c can all be estimated, which allows equation 5 to be used to calculate the active power value of $P_{VSC1}$ that, when applied by the VSC 34 together with the reactive power value of $Q_{VSC1}$ = $Q_L$, will put the distribution network into an approximation of the minimum power loss state.

The quantity $Q_L$ is one half of the sum of all the reactive loads in the distribution network 10 - see point d) above. Inspection of logs of reactive load data for real distribution networks indicates that the $Q_L$ can be stable over a relatively long period of time. For example, historical data logs for the distribution network that covers the island of Anglesey indicate that the reactive power drawn by all of the 33kV loads - equivalent to the loads represented by substations 18-28 in Figure 1 that is modelled by the pi equivalent circuit of Figure 3 - was approximately constant over the course of a one-year period. Therefore, it can be validly assumed that a value for $Q_L$ can be obtained by visiting the substations 12-18 periodically to measure the reactive power that they each draw, summing the results and then halving the total. It is therefore suggested that this exercise for establishing $Q_L$ be repeated on a six-monthly basis, which is prudently within the one-year period of stability apparent from investigating the Anglesey data.

The parameters m and c for equation 5 are obtained by recording at the VSC 34 values of the active power $P_{VSC1}$ that it injecting into the distribution network 10 as the VSC 34 sweeps, stepwise, the reactive power $Q_{VSC1}$ that it injects into the distribution network 10. For each setting of $Q_{VSC1}$, the VSC 34 makes a corresponding measurement of $P_{VSC1}$. *A* straight line is then fitted to the resulting pairs of $P_{VSC1}$ and $Q_{VSC1}$ values to yield the gradient m and intercept c terms of equation 5. Figure 5 illustrates a straight line 100 fitted to points, generally indicated 102, specified by the pairs of $P_{VSC1}$ and $Q_{VSC1}$ values. The discontinuities 104 in the series of points arise from tap-changer operations in the transformers of the substations 12-16. Investigations have established that the relationship between $P_{VSC1}$ and $Q_{VSC1}$ changes on a much shorter time scale than the $Q_L$ measurement. Measurements of m and c have been made for the distribution network covering the island of Anglesey using a VSC connected into that network, and have been shown to hold valid for periods of 30 minutes.

Once valid values of m and c have been established, they can be put into equation 5 along with the measured value of $Q_L$ in order to estimate the active power that the VSC 34 needs to apply to the distribution network 10 alongside an injected reactive power of $Q_L$ in order to approximately minimise power loss in the distribution network. The VSC 34 can conduct a fresh sweep of $Q_{VSC1}$ whenever necessary in order to calculate fresh values of m, *c* and $P_{VSC1}$ to prevent power loss in the distribution network from drifting up.

## Claims

**1.** A computer implemented method of controlling an electricity distribution network (10), wherein:

the electricity distribution network (10) is constructed as a mesh network including a plurality of loads (18-28) and there is a voltage-source converter (34) connected to a point in the network, wherein real-power and reactive-power flow between the network (10) and the voltage-source converter (34); and
**characterised in that** the method comprises:

while using the voltage-source converter to try to hold the voltage magnitude constant at said point, establishing a record of how, at said point, the real power flowing between the network and the voltage-source converter varies with variation of the reactive power that the voltage-source converter causes to flow between itself and the network;
receiving an estimate of a sum of the reactive-power draws of the plurality of loads of the mesh network;
using a reactive-power value, proportional to the sum of the reactive-power draws of the plurality of loads, in order to look up a real-power value from the record; and

configuring the voltage-source converter (34) to supply into the network (10) at said point reactive and real power at said reactive- and real-power values, respectively.

2. The method of claim 1 wherein:

establishing said record comprises establishing a set of power-value co-ordinate pairs and fitting a curve (100) to the co-ordinate pairs to describe the relationship between real- and reactive-power flows at said point;
using the reactive-power value to look up the real-power value comprises using the reactive-power value in order to look up the real-power value from the curve (100);
each co-ordinate pair comprises:

a reactive-power amount; and
a real-power amount measured as flowing into the network (10) at said point when the voltage-source converter (34) is operated to cause the reactive-power amount to flow into the network (10) at said point.

3. The method of claims 1 or 2, wherein the curve (100) is described by an equation linking real power and reactive power at said point when the voltage magnitude is constant at said point.

4. The method of claim 3, wherein the equation is a straight-line equation.

5. The method of any of claims 3 or 4, wherein the equation assumes the network can be modelled as a pi-equivalent circuit.

6. The method of any preceding claim, wherein the reactive-power draws are harvested from logs produced at each of the loads.

7. The method of any preceding claim, wherein a negative real- or reactive-power amount means a flow of real or reactive power, respectively, from the network (10) into the voltage-source converter (34).

8. The method of any preceding claim, wherein the reactive-power value is one half of the sum of the reactive-power draws of the loads.

9. The method of any preceding claim, wherein the voltage-source converter (34) is connected at said point via an isolating transformer.

10. The method of any preceding claim, wherein the network includes direct generators, such as sources of solar (30) and wind power (32).

11. The method of any preceding claim, wherein the voltage-source converter is, in use, to be connected via a DC link (90) to another voltage-source converter connected to another electricity distribution network.

12. The method of claim 11, wherein a controller (33) controls the voltage-source converters to control power flow between the two networks.

13. A computer readable medium having recorded thereon program code for causing data processing equipment to perform a method according to any one of claims 1 to 12.

14. An apparatus for controlling an electricity distribution network (10), wherein: the electricity distribution network (10) is a mesh network including a plurality of loads (18-28) and there is a voltage-source converter (34) connected to a point in the network, wherein real-power and reactive-power flow between the network (10) and the voltage-source converter (34); and the apparatus comprises a controller and an interface for connecting the controller to the voltage-source converter, **characterised in that** the controller is configured to perform the method of any one of claims 1-11.

## Patentansprüche

1. Computerimplementiertes Verfahren zur Steuerung eines Stromverteilungsnetzwerks (10), wobei:

das Stromverteilungsnetzwerk (10) als Maschennetzwerk aufgebaut ist, das eine Vielzahl von Lasten (18-28) einschließt und

an einem Punkt des Netzwerks ein Spannungsquellenwandler (34) angeschlossen ist, wobei Real- und Blindleistung zwischen dem Netzwerk (10) und dem Spannungsquellenwandler (34) fließen; und

**dadurch gekennzeichnet, dass** das Verfahren Folgendes umfasst:

während unter Verwendung des Spannungsquellenwandlers versucht wird, die Spannungsgröße an diesem Punkt konstant zu halten, Erstellen einer Aufzeichnung darüber, wie an diesem Punkt die zwischen dem Netzwerk und dem Spannungsquellenwandler fließende Wirkleistung mit der Änderung der Blindleistung variiert, die der Spannungsquellenwandler zwischen sich und dem Netzwerk fließen lässt;

Empfangen einer Schätzung einer Summe der Blindleistungsaufnahmen der Vielzahl von Lasten des Maschennetzwerks;

Verwenden eines Blindleistungswerts, der proportional zur Summe der Blindleistungsaufnahmen der Vielzahl von Lasten ist, um einen Realleistungswert aus der Aufzeichnung zu ermitteln; und

Konfigurieren des Spannungsquellenwandlers (34) zur Einspeisung von Blind- und Wirkleistung in das Netzwerk (10) an diesem Punkt mit den genannten Blind- bzw. Wirkleistungswerten.

**2.** Verfahren nach Anspruch 1, wobei:

das Erstellen der Aufzeichnung das Erstellen eines Satzes von Leistungswertkoordinatenpaaren und das Anpassen einer Kurve (100) an die Koordinatenpaare umfasst, um die Beziehung zwischen Real- und Blindleistungsflüssen an dem Punkt zu beschreiben;

das Verwenden des Blindleistungswerts zum Nachschlagen des Wirkleistungswerts das Verwenden des Blindleistungswerts zum Ermitteln des Wirkleistungswerts aus der Kurve (100) umfasst;

jedes Koordinatenpaar Folgendes umfasst:

eine Blindleistungsmenge; und

eine Realleistungsmenge, die so gemessen wird, dass sie an diesem Punkt in das Netzwerk (10) fließt, wenn der Spannungsquellenwandler (34) betrieben wird, um die Blindleistungsmenge an diesem Punkt in das Netzwerk (10) fließen zu lassen.

**3.** Verfahren nach Anspruch 1 oder 2, wobei die Kurve (100) durch eine Gleichung beschrieben wird, die die Realleistung und die Blindleistung an diesem Punkt verknüpft, wenn die Spannungsgröße an diesem Punkt konstant ist.

**4.** Verfahren nach Anspruch 3, wobei die Gleichung eine Geradengleichung ist.

**5.** Verfahren nach einem der Ansprüche 3 oder 4,
wobei die Gleichung davon ausgeht, dass das Netzwerk als Pi-Äquivalentschaltung modelliert werden kann.

**6.** Verfahren nach einem der vorstehenden Ansprüche, wobei die Blindleistungsaufnahmen aus den an jeder der Lasten erzeugten Protokollen geerntet werden.

**7.** Verfahren nach einem der vorstehenden Ansprüche, wobei ein negativer Real- oder Blindleistungsbetrag einen Fluss von Real- bzw. Blindleistung aus dem Netzwerk (10) in den Spannungsquellenwandler (34) bedeutet.

**8.** Verfahren nach einem der vorstehenden Ansprüche, wobei der Blindleistungswert die Hälfte der Summe der Blindleistungsaufnahmen der Lasten beträgt.

**9.** Verfahren nach einem der vorstehenden Ansprüche, wobei der Spannungsquellenwandler (34) an diesem Punkt über einen Trenntransformator angeschlossen ist.

**10.** Verfahren nach einem der vorstehenden Ansprüche, wobei das Netzwerk Direktgeneratoren, wie beispielsweise Quellen für Solar- (30) und Windenergie (32), einschließt.

**11.** Verfahren nach einem der vorstehenden Ansprüche, wobei der Spannungsquellenwandler im Gebrauch über einen DC-Link (90) mit einem anderen Spannungsquellenwandler zu verbinden ist, der an ein anderes Stromverteilungsnetz angeschlossen ist.

**12.** Verfahren nach Anspruch 11, wobei eine Steuerung (33) den Spannungsquellenwandler steuert, um den Leistungsfluss zwischen den beiden Netzwerken zu steuern.

**13.** Computerlesbares Medium, das einen darauf aufgezeichneten Programmcode aufweist, um eine Datenverarbeitungsausrüstung zu veranlassen, ein Verfahren nach einem der Ansprüche 1 bis 12 durchzuführen.

**14.** Vorrichtung zur Steuerung eines Stromverteilungsnetzwerks (10), wobei: das Stromverteilungsnetzwerk (10) ein Maschennetzwerk ist, das eine Vielzahl von Lasten (18-28) einschließt, und ein Spannungsquellenwandler (34) an einen Punkt des Netzwerks angeschlossen ist, wobei Real- und Blindleistung zwischen dem Netzwerk (10) und dem Spannungsquellenwandler (34) fließen; und die Vorrichtung eine Steuerung und eine Schnittstelle zur Verbindung der Steuerung mit dem Spannungsquellenwandler umfasst, **dadurch gekennzeichnet, dass** die Steuerung so konfiguriert ist, dass sie das Verfahren nach einem der Ansprüche 1 bis 11 durchführt.

## Revendications

**1.** Procédé mis en œuvre par ordinateur consistant à commander un réseau (10) de distribution d'électricité, dans lequel :

le réseau (10) de distribution d'électricité est construit en tant que réseau maillé incluant une pluralité de charges (18-28) et
il y a un convertisseur de source de tension (34) connecté à un point dans le réseau, dans lequel une puissance réelle et une puissance réactive circulent entre le réseau (10) et le convertisseur de source de tension (34) ; et
**caractérisé en ce que** le procédé comprend :

pendant l'utilisation du convertisseur de source de tension pour essayer de maintenir l'amplitude de tension constante au niveau dudit point, l'établissement d'un enregistrement de la manière dont, au niveau dudit point, la puissance réelle circulant entre le réseau et le convertisseur de source de tension varie avec la variation de la puissance réactive que le convertisseur de source de tension provoque sur la circulation entre lui-même et le réseau ;
la réception d'une estimation d'une somme des tirages de puissance réactive de la pluralité de charges du réseau maillé ;
l'utilisation d'une valeur de puissance réactive, proportionnelle à la somme des tirages de puissance réactive de la pluralité de charges, afin de consulter une valeur de puissance réelle à partir de l'enregistrement ; et
la configuration du convertisseur de source de tension (34) pour apporter dans le réseau (10) au niveau dudit point la puissance réactive et la puissance réelle auxdites valeurs de puissance réactive et réelle, respectivement.

**2.** Procédé selon la revendication 1 dans lequel :

l'établissement dudit enregistrement comprend l'établissement d'un ensemble de paires de coordonnées de valeur de puissance et l'adaptation d'une courbe (100) aux paires de coordonnées pour décrire la relation entre les circulations de puissance réelle et de puissance réactive au niveau dudit point ;
l'utilisation de la valeur de puissance réactive pour consulter la valeur de puissance réelle comprend l'utilisation de la valeur de puissance réactive afin de consulter la valeur de puissance réelle à partir de la courbe (100) ;
chaque paire de coordonnées comprend :

une quantité de puissance réactive ; et
une quantité de puissance réelle mesurée comme circulant dans le réseau (10) au niveau dudit point lorsque le convertisseur de source de tension (34) est actionné pour amener la quantité de puissance réactive à circuler dans le réseau (10) au niveau dudit point.

**3.** Procédé selon la revendication 1 ou revendication 2, dans lequel la courbe (100) est décrite par une équation liant puissance réelle et puissance réactive au niveau dudit point lorsque l'amplitude de tension est constante au niveau dudit point.

**4.** Procédé selon la revendication 3, dans lequel l'équation est une équation à ligne droite.

5. Procédé selon l'une quelconque des revendications 3 ou 4, dans lequel l'équation suppose que le réseau peut être modélisé en tant que circuit pi-équivalent.

6. Procédé selon une quelconque revendication précédente, dans lequel les tirages de puissance réactive sont collectés à partir de journaux produits au niveau de chacune des charges.

7. Procédé selon une quelconque revendication précédente, dans lequel une quantité de puissance réelle ou réactive négative désigne une circulation de puissance réelle ou réactive, respectivement, depuis le réseau (10) dans le convertisseur de source de tension (34).

8. Procédé selon une quelconque revendication précédente, dans lequel la valeur de puissance réactive est une moitié de la somme des tirages de puissance réactive des charges.

9. Procédé selon une quelconque revendication précédente, dans lequel le convertisseur de source de tension (34) est connecté au niveau dudit point via transformateur d'isolation.

10. Procédé selon une quelconque revendication précédente, dans lequel le réseau inclut des générateurs directs, tels que des sources d'énergie solaire (30) et éolienne (32).

11. Procédé selon une quelconque revendication précédente, dans lequel le convertisseur de source de tension doit, lors de l'utilisation, être connecté via une liaison CC (90) à un autre convertisseur de source de tension connecté à un autre réseau de distribution d'électricité.

12. Procédé selon la revendication 11, dans lequel un dispositif de commande (33) commande les convertisseurs de source de tension pour commander la circulation de puissance entre les deux réseaux.

13. Support lisible par ordinateur sur lequel est enregistré un code de programme pour amener un équipement de traitement de données à mettre en œuvre un procédé selon l'une quelconque des revendications 1 à 12.

14. Appareil de commande d'un réseau (10) de distribution d'électricité, dans lequel : le réseau (10) de distribution d'électricité est un réseau maillé incluant une pluralité de charges (18-28) et il y a un convertisseur de source de tension (34) connecté à un point dans le réseau, dans lequel la puissance réelle et la puissance réactive circulent entre le réseau (10) et le convertisseur de source de tension (34) ; et l'appareil comprend un dispositif de commande et une interface pour connecter le dispositif de commande au convertisseur de source de tension, **caractérisé en ce que** le dispositif de commande est configuré pour mettre en œuvre le procédé selon l'une quelconque des revendications 1 à 11.

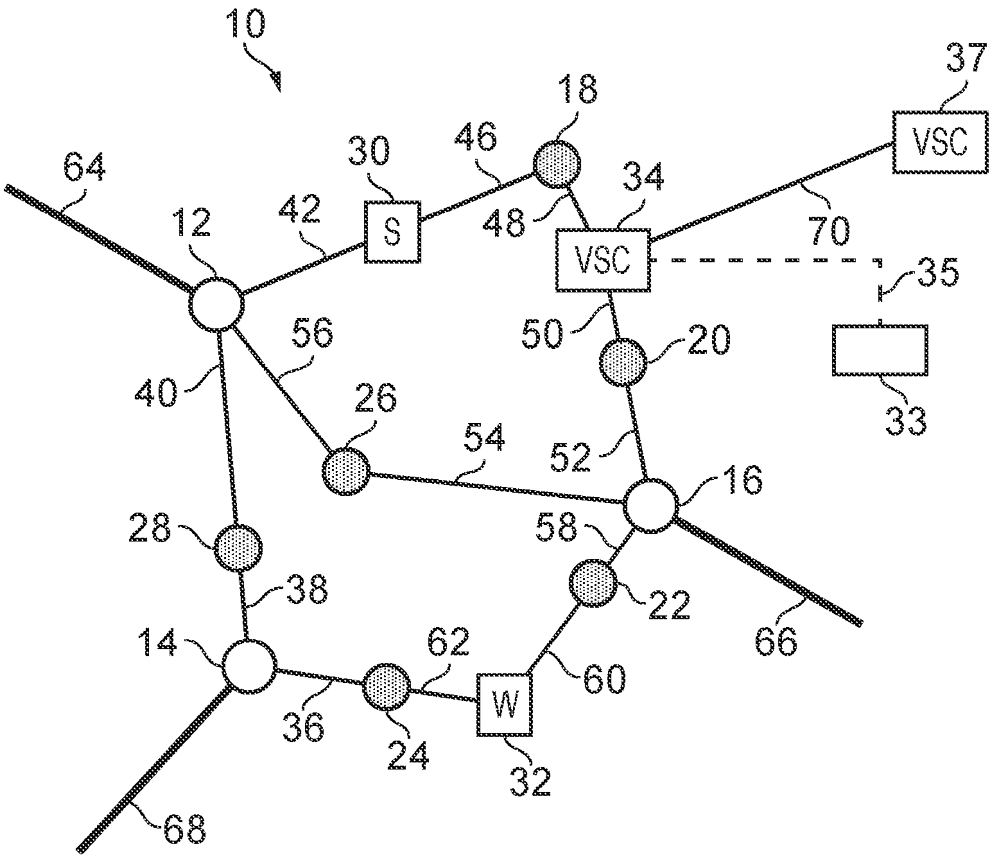
10
64
12
42
30
S
46
18
48
34
VSC
37
VSC
70
35
33
56
40
26
54
50
20
52
16
28
38
58
22
66
14
62
W
60
36
24
32
68

FIG. 1

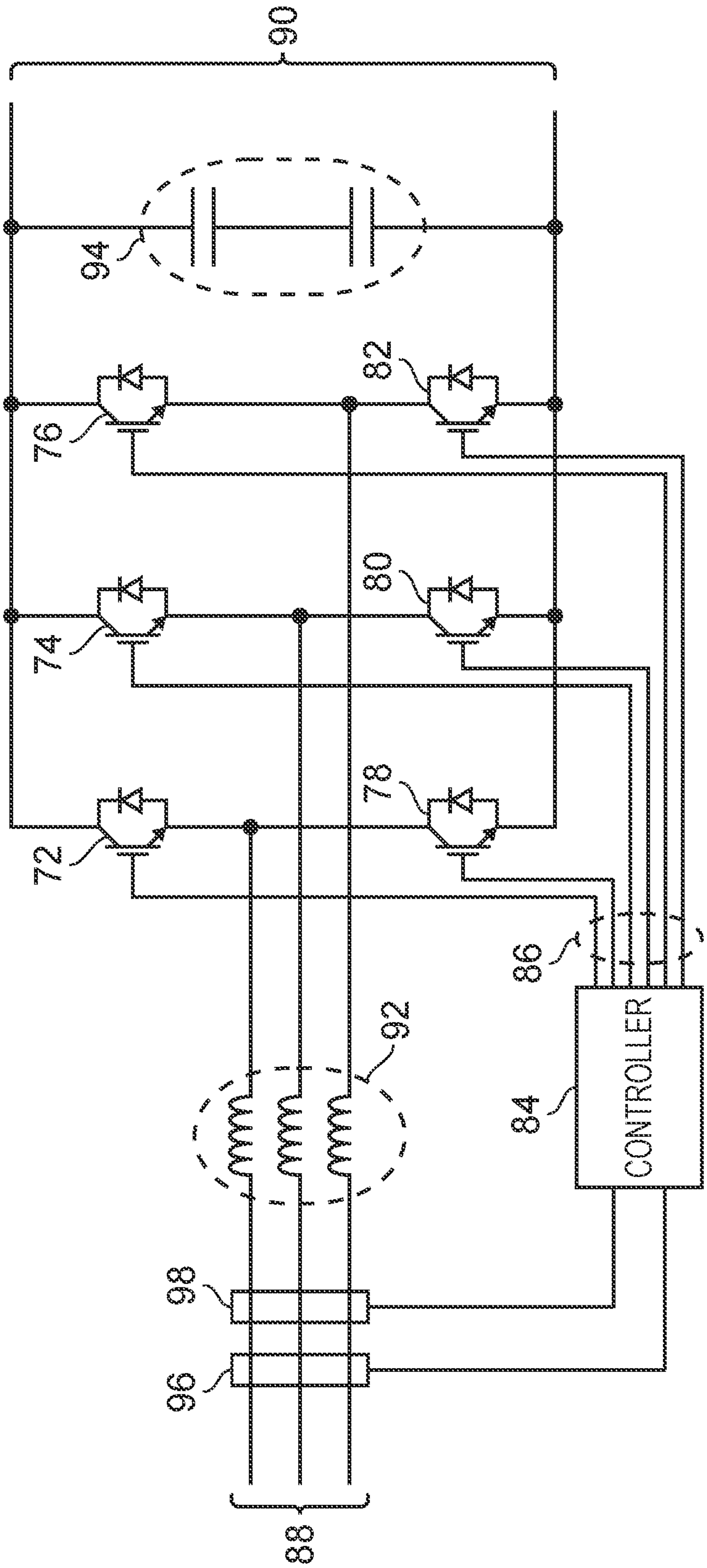


FIG. 2

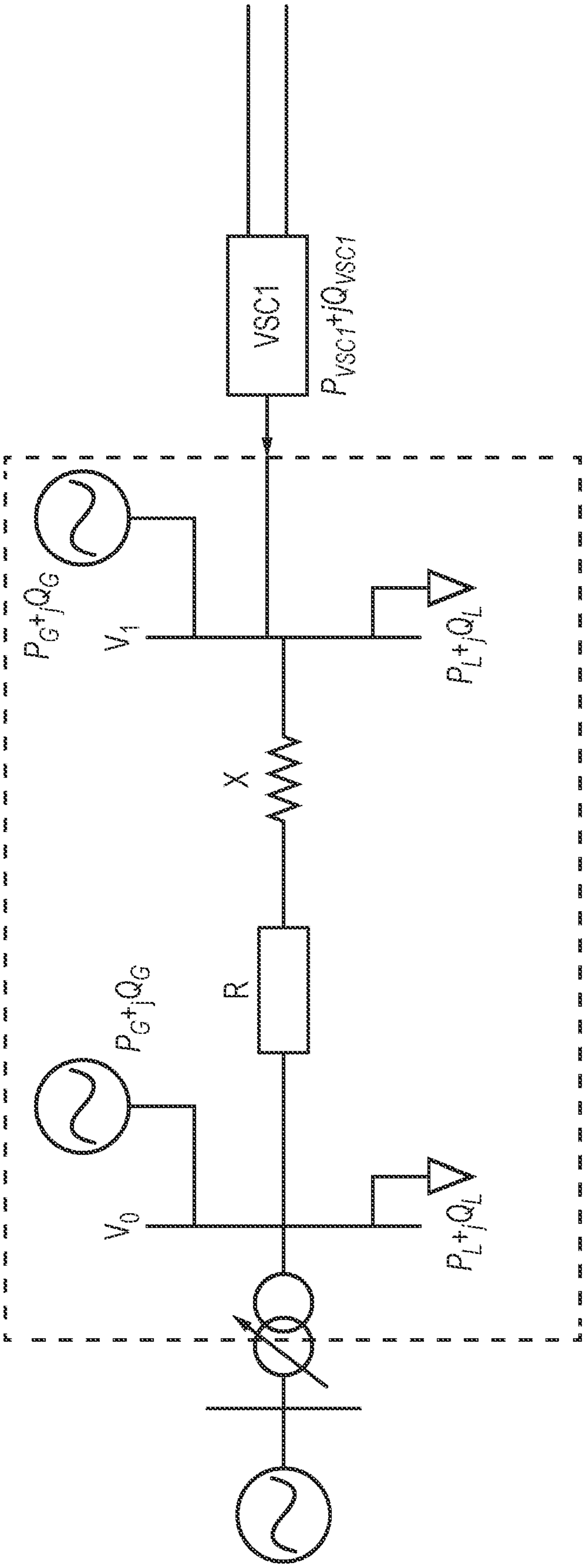


FIG. 3

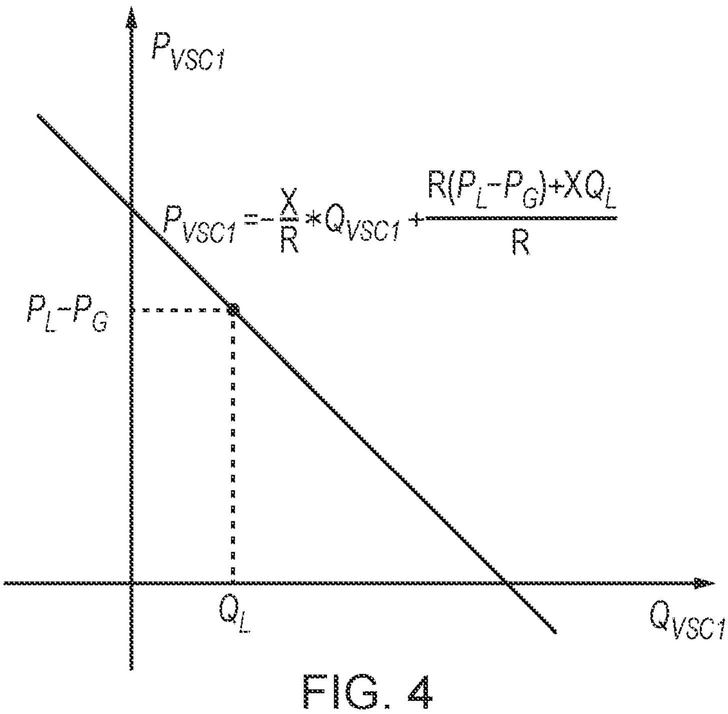

$P_{VSC1}$
$P_{VSC1} = -\frac{X}{R} * Q_{VSC1} + \frac{R(P_L - P_G) + XQ_L}{R}$
$P_L - P_G$
$Q_L$
$Q_{VSC1}$


FIG. 4

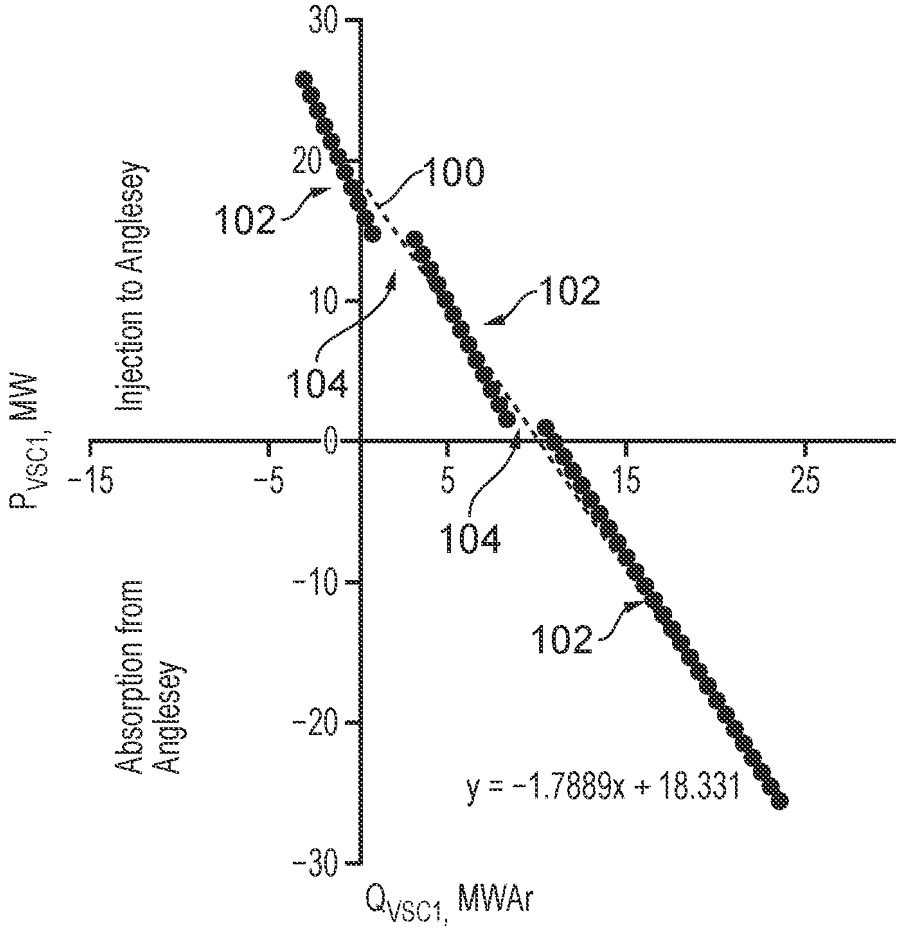

30
20
10
0
−10
−20
−30
−15
−5
5
15
25
100
102
102
102
104
104
Injection to Anglesey
Absorption from Anglesey
$P_{VSC1}$, MW
$Q_{VSC1}$, MWAr
y = −1.7889x + 18.331


FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 107732926 A
- WO 2016012411 A1
- US 2013250635 A1
- WO 2017062109 A1